# NOUVEAU FASCICULE DE BREVET EUROPEEN

(11) **EP 0 895 332 B2**
(45) Date de publication et mention de la décision concernant l'opposition: **08.02.2012**
(45) Mention de la délivrance du brevet: 07.05.2003
(21) Numéro de dépôt: 98401951.3
(22) Date de dépôt: 30.07.1998
(51) Int. Cl.: H02H 9/06

(54) **Dispositif de protection contre les surtensions avec des Úclateurs en parallÞle comprenant chacun une inductance**
?berspannungsschutzeinrichtung mit parallel geschalteten Funkenstrecken jeweils mit einer Induktivitõt
Overvoltage protection device with parallel dischargers, each comprising an inductance

(30) Priorité: 01.08.1997 FR 9709868
(43) Date de publication de la demande: 03.02.1999
(73) Titulaire: ABB France, 91978 Courtaboeuf Cedex (FR)
(72) Inventeur: Rousseau, Alain, 65200 Orignac (FR); Serrie, Gérard, 65360 Vielle Adour (FR)
(74) Mandataire: Hirsch & Associés

(56) Documents cités:
- DE-B- 1 009 709
- FR-A- 2 716 044
- "SUMMENSTROM-FUNKENSTRECKE FUER DAS TT-SYSTEM" ELEKTROTECHNISCHE ZEITSCHRIFT - ETZ, vol. 117, no. 3, 1 février 1996, page 7 XP000555687

## Description

La présente invention concerne le domaine des dispositifs de protection des équipements électroniques et/ou électrotechniques, contre des surtensions transitoires.

Plus précisément, elle concerne le domaine des dispositifs de protection à base de parafoudre comportant au moins une varistance, pour réseau de distribution électrique de type T-T.

On rappelle que les réseaux de distribution de type T-T sont des installations dans lesquelles le neutre est relié à la terre au niveau du poste source, tandis que la masse des installations est reliée à la terre.

On sait que dans de tels réseaux, il est impératif d'éviter qu'un défaut dans un élément parafoudre disposé entre la ligne de neutre et la ligne de terre ne puisse avoir comme conséquence de relier de façon permanente la ligne de neutre à la ligne de terre.

Pour résoudre ce problème, différentes solutions ont déjà été proposées par la Demanderesse, notamment dans son brevet français n° 2 716 044.

Dans des solutions de ce brevet, il était en particulier proposé de relier la ligne de phase à la ligne de neutre et à la ligne de terre par l'intermédiaire de varistances, tandis que la ligne de neutre était reliée à la ligne de terre par l'intermédiaire d'un éclateur.

Pour supporter des courants de foudre élevés, cet éclateur était avantageusement disposé en série avec un fusible de protection et de déconnexion.

Un tel fusible - qui présente par exemple une structure du type de celle décrite dans la demande de brevet français de la demanderesse déposée sous le numéro 96 14660 - est peu commun, volumineux et cher.

L'invention propose quant à elle un dispositif de protection contre les surtensions qui est réalisé à partir de composants qui ne présentent pas ces inconvénients et qui est susceptible de résister à des courants de foudre élevés.

On connaît déjà par le document « Summenstrom-Funkenstrecke fuer das TT-System »- Elektrotechnische Zeitschrift - ETZ, vol. 117, n°3, 1 février 1996, page 7 XP000555687 un dispositif de protection des équipements électroniques et/ou électrotechniques à l'encontre de surtensions transitoires, pour réseaux de distribution électrique de type T-T, constitué de moyens (E1, E2) formant éclateur interposés entre la ligne de neutre (N) et la ligne de terre (T), ainsi que des moyens formant varistance (V10 ; V11, V12) interposés entre la (ou les) ligne(s) de phase et la ligne de neutre, la (ou les) ligne(s) de phase (Ph ; Ph1, Ph2, Ph3) et la ligne de terre (T) étant en circuit ouvert.

Par ailleurs, il est connu de DE 1 009 709 un dispositif de protection contre les surtensions comprenant entre une ligne et la terre deux branches parallèles incluant chacune un composant de protection contre les surtensions en série avec une bobine, lesdites bobines étant couplées magnétiquement l'une avec l'autre.

L'invention propose quant à elle un dispositif de protection des équipements électroniques et/ou électrotechniques à l'encontre de surtensions transitoires, pour réseaux de distribution électrique de type T-T, tel que défini dans la revendication 1.

Ce dispositif est avantageusement complété par les différentes caractéristiques suivantes prises seules ou selon toutes leurs combinaisons techniquement possibles :
- il comporte des moyens de déconnexion sensibles à l'état des éclateurs ;
- ces moyens de déconnexion sont associés de façon individuelle à chaque éclateur ;
- les moyens de déconnexion sont constitués de déconnecteurs thermiques.

D'autres caractéristiques et avantages de l'invention ressortiront encore de la description qui suit. Cette description est purement illustrative et non limitative. Elle doit être lue en regard des dessins annexés sur lesquels :
- la figure 1 illustre un mode de réalisation possible de l'invention ;
- la figure 2 illustre un deuxième mode de réalisation possible de l'invention ;
- la figure 3 illustre un troisième mode de réalisation possible de l'invention.

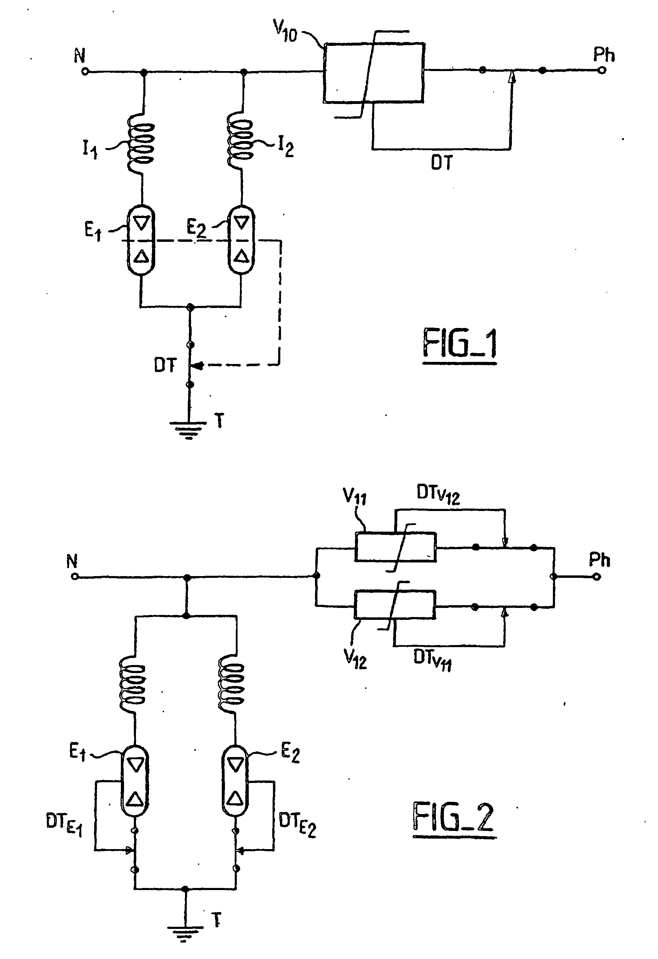

Sur la figure 1, les références N, T et Ph désignent respectivement les lignes de neutre, de terre et de phase.

Le dispositif illustré sur cette figure 1 comprend une varistance V10 interposée entre la ligne de neutre N et la ligne de phase Ph.

La ligne de neutre N est reliée à la ligne de terre T par deux branches parallèles comportant chacune un éclateur en série avec une inductance.

Les éclateurs ont été respectivement référencés par E1 et E2, les inductances par I1 et I2.

On dispose ainsi d'un dispositif de protection contre les surtensions transitoires qui correspond à un schéma électrique sensiblement équivalent à ceux décrits dans le brevet FR 2 716 044, en référence à ses figures 4 à 6, avec comme différences principales :
- que la ligne de phase Ph et la ligne de terre T sont en circuit ouvert ;
- que l'éclateur est dédoublé et est constitué par deux éclateurs de capacité moitié montés en parallèle.

En supprimant la varistance entre la ligne de phase Ph et la ligne de terre T, on élimine un composant et on augmente par conséquent la fiabilité du système.

Egalement, on diminue le courant de fuite à la terre et on augmente la sécurité de l'installation.

Par ailleurs, on ne dégrade pas le niveau de protection de la branche phase-terre, puisque le niveau de protection de cette branche correspond au maximum des niveaux de la tension d'amorçage des deux éclateurs E1, E2 et de la tension résiduelle dans la varistance V10.

La varistance V10 est choisie de façon à présenter une tension résiduelle basse, typiquement de 275 Volts, pour des tensions d'amorçage pour l'ensemble que constituent les éclateurs E1, E2 de l'ordre de 600 à 800 Volts.

Le dédoublement de l'éclateur permet quant à lui de disposer d'un éclateur de forte capacité réalisé à partir de composants facilement disponibles.

Les éclateurs E1 et E2 sont par exemple des éclateurs à gaz que le constructeur garantit pour supporter 20 fois son courant nominal, par exemple 20x10kA sous choc transitoire de forme 8/20.

Les inductances I1 et I2 ont des valeurs faibles (inférieures à 1 µH).

Le fonctionnement du dispositif qui vient d'être décrit est le suivant :
- l'un des éclateurs E1, E2 amorce en premier sur choc de foudre,
- le courant de foudre circule alors dans la branche E1-I1 ou E2-I2 qui lui correspond,
- une tension due à la variation d'intensité dans l'inductance est ainsi créée,
- le deuxième éclateur amorce alors, grâce au dimensionnement adéquat de l'inductance.

On notera que la faible valeur de l'inductance permet d'éviter de dégrader le niveau de protection.

D'autres variantes de réalisation de l'invention sont bien entendu possibles.

Notamment, le dispositif peut comporter entre la ligne de neutre N et la ligne de terre T un nombre plus important de branches comportant en série un éclateur et une inductance.

Egalement, il peut être prévu entre le ligne de terre T et un noeud commun aux branches qui la relient à la ligne de neutre N ou encore sur chacune desdites branches un fusible qui est par exemple un déconnecteur thermique DT. De tels dispositifs de déconnexion permettent d'augmenter la sécurité de l'installation.

Egalement, ainsi qu'on l'a illustré sur la figure 2, la branche entre la ligne de phase Ph et la ligne de neutre N peut comporter deux varistances V11, V12 en parallèle et des moyens de déconnexion DT_{V11}, DT_{V12}-déconnecteurs thermiques par exemple - sensibles à l'état de ces varistances et adaptés pour déconnecter individuellement chaque varistance en fin de vie. une telle structure est par exemple du type de celle qui a été décrite par la demanderesse dans sa demande de brevet français déposée sous le n° 94 14586.

Dans l'exemple illustré sur cette figure 2, des déconnecteurs thermiques DT_{E1} et DT_{E2} sont respectivement montés sur chacune des branches entre la ligne de neutre N et la ligne de terre T en série avec les éclateurs E1 et E2.

On dispose ainsi de moyens de déconnexion associés de façon individuelle à chaque éclateur.

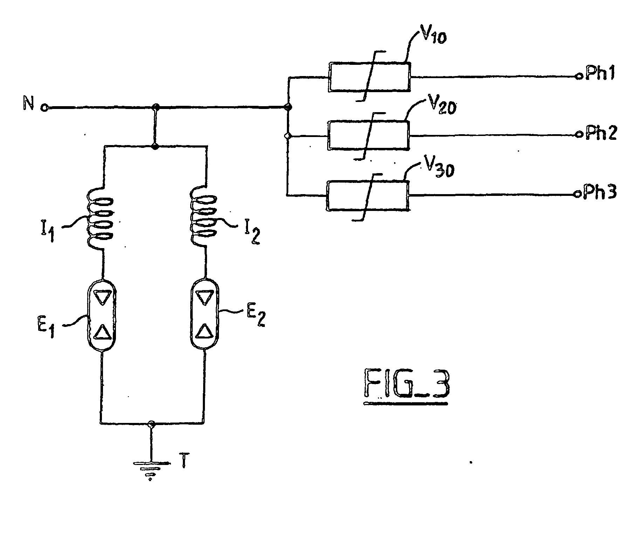

Bien entendu, ainsi que l'illustre la figure 3, l'invention s'applique également pour la protection de circuits triphasés.

Dans l'exemple illustré sur cette figure 3, trois lignes de phases Ph1 à Ph3 sont reliées par des varistances respectivement référencées par V10, V20 et V30 à la ligne de neutre N.

La ligne de neutre N est elle-même reliée à la ligne de terre T par l'intermédiaire de deux branches parallèles comportant chacune un éclateur E1 (resp. E2) en série avec une inductance I1 (resp. I2).

## Revendications

1. Dispositif de protection des équipements électroniques et/ou électrotechniques à l'encontre de surtensions transitoires, pour réseaux de distribution électrique de type T-T, constitué de moyens (E1, E2) formant éclateur interposés entre la ligne de neutre (N) et la ligne de terre (T), ainsi que des moyens formant varistance (V 10 ; V11, V12) interposés entre la (ou les) ligne(s) de phase et la ligne de neutre, la (ou les) ligne(s) de phase (Ph ; Ph1, Ph2, Ph3) et la ligne de terre (T) étant en circuit ouvert, **caractérisé en ce que** les moyens formant éclateur comprennent au moins deux branches qui sont montées en parallèle et qui comportent chacune un éclateur (E1, E2) en série avec une inductance (I1, I2) non couplée magnétiquement l'une avec l'autre.

2. Dispositif selon la revendication 1, **caractérisé en ce qu'**il comporte des moyens de déconnexion (DT_{E1}, DT_{E2}) sensibles à l'état des éclateurs.

3. Dispositif selon la revendication 2, **caractérisé en ce que** ces moyens de déconnexion (DT_{E1}, DT_{E2}) sont associés de façon individuelle à chaque éclateur.

4. Dispositif selon l'une des revendications 2 et 3, **caractérisé en ce que** les moyens de déconnexion (DT_{E1}, DT_{E2}) sont constitués de déconnecteurs thermiques.

## Claims

1. A circuit for protecting electronic and/or electrical equipment against transient surges for T-T type electricity distribution networks, the circuit being constituted by arrester forming means (E1, E2) interposed between the neutral line (N) and the ground line (T), and varistor forming means (V10; V11; V12) interposed between the phase line(s) and the neutral line, the phase line(s) (Ph; Ph1, Ph2, Ph3) and the ground line (T) being in open circuit, the circuit being **characterized in that** the arrester forming means comprise at least two branches which are connected in parallel, each of which comprises an arrester (E1, E2) in series with an inductor (I1, I2) which latter are not magnetically coupled one with the other.

2. A circuit according to claim 1, **characterized in that** it includes disconnection means (DT_{E1}, DT_{E2}) sensitive to the state of the arresters.

3. A circuit according to claim 2, **characterized in that** the disconnection means (DT_{E1}, DT_{E2}) are associated individually with each arrester.

4. A circuit according to claim 1 or claim 2, **characterized in that** the disconnection means (DT_{E1}, DT_{E2}) are constituted by thermal disconnectors.

## Patentansprüche

1. Vorrichtung zum Schutz von elektronischen und/ oder elektrotechnischen Einrichtungen gegenüber vorübergehenden Überspannungen für elektrische Verteilungsnetze vom TT-Typ, gebildet durch Funkenstrecken- Mittel (E1, E2), die zwischen die Neutralleitung (N) und die Erdleitung (T) geschaltet sind, sowie Varistor-Mittel (V10; V11, V12), die zwischen die Phasenleitung (oder - leitungen) und die Neutralleitung geschaltet sind, wobei die Phasenleitung (oder -leitungen) (Ph; Ph1, Ph2, Ph3) und die Erdleitung (T) in offenem Kreis sind, **dadurch gekennzeichnet, daß** die Funkenstrecken-Mittel mindestens zwei Zweige umfassen, welche parallel angeordnet sind und jeweils eine Funkenstrecke (E1, E2) in Serie mit einer Induktivität (I1, I2), die nicht magnetisch miteinander gekoppelt sind, aufweisen.

2. Vorrichtung nach Anspruch 1, **dadurch gekennzeichnet, daß** sie Mittel zur Trennung (DT_{E1}, DT_{E2}) aufweist, die auf den Zustand der Funkenstrecken empfindlich sind.

3. Vorrichtung nach Anspruch 2, **dadurch gekennzeichnet, daß** die Mittel zur Trennung (DT_{E1}, DT_{E2}) in individueller Art mit der jeweiligen Funkenstrecke verbunden sind.

4. Vorrichtung nach einem der Ansprüche 2 und 3, **dadurch gekennzeichnet, daß** die Mittel zur Trennung (DT_{E1}, DT_{E2}) durch thermische Trenner gebildet sind.
